(19) **Europäisches Patentamt**

**European Patent Office**

**Office européen des brevets**

(11) **EP 1 205 742 B1**

(12) **EUROPEAN PATENT SPECIFICATION**

(45) Date of publication and mention
of the grant of the patent:
**09.08.2006 Bulletin 2006/32**

(51) Int Cl.:
*G01N 1/30* (2006.01)     *G06F 19/00* (2006.01)

(21) Application number: **01123216.2**

(22) Date of filing: **01.10.2001**

(54) **Automated classification of cellular structures**

Automatische Klassifizierung von Zellstrukturen

Classification automatique de structures cellulaires

(84) Designated Contracting States:
**AT BE CH CY DE DK ES FI FR GB GR IE IT LI LU MC NL PT SE TR**

(30) Priority: **29.09.2000 EP 00121489**

(43) Date of publication of application:
**15.05.2002 Bulletin 2002/20**

(73) Proprietor: **Deutsches Krebsforschungszentrum**
**69120 Heidelberg (DE)**

(72) Inventors:
• **Eils, Roland**
  **69198 Schriesheim (DE)**
• **Ellenberg, Jan**
  **69115 Heidelberg (DE)**
• **Conrad, Christian**
  **69115 Heidelberg (DE)**

(74) Representative: **Vossius & Partner**
**Siebertstrasse 4**
**81675 München (DE)**

(56) References cited:
**US-A- 5 692 107**

• **BOLAND M V ET AL: "Automated recognition of patterns characteristic of subcellular structures in fluorescence microscopy images."** CYTOMETRY: THE JOURNAL OF THE SOCIETY FOR ANALYTICAL CYTOLOGY. UNITED STATES 1 NOV 1998, vol. 33, no. 3, 1 November 1998 (1998-11-01), pages 366-375, XP002206335 ISSN: 0196-4763
• **MURPHY R F ET AL: "Towards a systematics for protein subcellular location: quantitative description of protein localization patterns and automated analysis of fluorescence microscope images"** PROCEEDINGS. EIGHTH INTERNATIONAL CONFERENCE ON INTELLIGENT SYSTEMS FOR MOLECULAR BIOLOGY, PROCEEDINGS OF THE EIGHTH INTERNATIONAL CONFERENCE ON INTELLIGENT SYSTEMS FOR MOLECULAR BIOLOGY, LA JOLLA, CA, USA, 16-23 AUG. 2000, pages 251-259, XP002206336 2000, Menlo Park, CA, USA, AAAI Press, USA ISBN: 1-57735-115-0
• **BOLAND M V ET AL: "Engineering in genomics"** IEEE ENGINEERING IN MEDICINE AND BIOLOGY MAGAZINE, SEPT.-OCT. 1999, IEEE, USA, vol. 18, no. 5, pages 115-119, XP002206337 ISSN: 0739-5175

**Description**

The present invention relates to the detection and classification of subcellular structures by a machine learning approach. In particular, this invention relates to the recognition of fluorescently labeled proteins forming specific patterns in cells by classifiers which were trained by a supervised neural network learning approach.

Cell biology is the study of biological processes in cells and their mechanism. At the core of this science the behavior of proteins plays a major role in biochemical pathways of the cell. New protein labeling techniques have facilitated the localization of proteins in cells. At the end of the genome discovery era, the functional analysis of gene coded proteins becomes more and more important. Therefore the localization, mobility, and dynamics of proteins in the cell are of great interest.

Over the past few years, the techniques to prepare mRNA from different cell types were commonly used to obtain cDNA for expression profiling studies. New high-capacity cloning and expression strategy allow the systematic acquisition and screening of functional data of novel cDNA. Therefore, the appropriated cloning vector containing the encoded protein are ligated with green fluorescence protein (GFP) (Cutler et al., 2000). Aequorea victoria green fluorescent protein (GFP) produces a fluorescent product when expressed in prokaryotic or eukaryotic cells (Prasher et al., 1992). Because exogenous substrates and cofactors are not required for this fluorescence, GFP expression can be used to monitor gene expression and protein localization in living organisms (Chalfie et al., 1994). The coding GFP fusion vectors are then transfected en masse into eukaryotic or prokaryotic cells and expression is analyzed in living cells at various time points after transfection and the localizations are recorded (Ding et al., 2000; Rolls et al., 1999). Screening thousands of GFP-fusion protein libraries is a useful approach for identifying and visualizing components of subcellular structures and their associated dynamics.

If any strategy for large scale functional analysis of ORF (open reading frames) and encoded proteins is to be initiated, it is evident that the methods need to have the potential to be automated. Therefore, one of the major issues which must be resolved beside the biological and methodical needs is the availability and application of robust pattern recognition algorithms to overcome tedious and error-prone manual screening by technical personnel. In the last three years high-throughput scanning microscopes have been developed to automate the visual screening of tissues, DNA, and protein structures (Davis et al., 1998; Hanzel et al., 1999; Joo et al., 1999; Ward and Carey, 1999). Also from the side of microscope system providers great efforts are made to improve such automatic scanning devices. It would be very useful to provide trained classifiers in such scanning device which could automatically recognize and classify the different subcellular structures in high-throughput scanning microscopes.

Today's research in neural computation is largely motivated by the possibility of making artificial computing networks. The term "neural networks" implies, it was originally aimed more towards modeling networks of real neurons in the brain. A simple model of a neuron as a binary threshold unit was proposed already in the forties (McCulloch and Pitts, 1943). Specifically, the model neurons computes a weighted sum of its inputs from other units, and the outputs are a one or zero according to whether this sum is above or below a certain threshold. Focusing on the problem of how to find the appropriate weights for the particular computational task perceptrons were designed in which the units were organized into layers with feed-forward connections between two subsequent layers. For the simplest class of perceptrons without any intermediate layer it was possible to prove the convergence of learning algorithms, a way to change the weights iteratively so that a desired computation was performed (Rosenblatt, 1962). An algorithm known as back propagation has been developed for adjusting the weights connecting units in successive layers of multi-layer perceptrons (Werbos, 1974). Back propagation neural network classification is applied in many different fields in life technology and is already used in various task of image analysis, i.e. chromosome classification (Cho, 2000), flow cytometry (Frankel et al., 1996), histology (Hanzel et al., 1999), ECG pattern (Marabini and Carazo, 1994), immunoelectrophoretic pattern (Sondergaard et al., 1992), or rRNA sequences (Wu and Shivakumar, 1994).

It is the object underlying the present invention to provide an improved automated classification of cellular structures.

This object is achieved with the subject-matter as recited in independent claims 1, 12, 13 and 14. In particular, the present invention classifies cellular structures with the steps of providing data of different subcellular structures and automatically generating classifiers for classifying the different subcellular structures.

The invention comprises methods and respective systems to detect and identify different subcellular structures by combination of image analysis and a neural network machine learning approach. As a feasibility study, this system was applied for recognition of protein structures in cell compartments or organelles by a neural network trained classifier using back propagation algorithms. The invention comprises the feeding of neural networks with fields of different cases, derived from the compressed information of digital images of subcellular structures to gain classifiers with highest accuracies for the detection of different protein structure classes.

"Classes" are defined in reference to subcellular compartments or structures such as chromatin, cytoplasm/nucleus, cytoplasm, endoplasmic reticulum, focal adhesions, Golgi apparatus, microtubules, mitochondria, nuclear rim, nucleoli, peroxisomes, plasmamembrane.

"Accuracies" are defined in reference to percentage of correctly classified cases by the neural network classifier;

"Classifier" in reference to software related information, which can be used in combination with appropriated software programs to classify digital images to classes;

"Digital images" in reference to any digitally captured image in one, two, three or more dimensions;

"Fields" in reference to the numerical or symbolic values of the multi-dimensional image;

"Compressed information" in reference to the essential image information generated by digital image preprocessing techniques; and

"Cases" in reference to one digital image assigned to one of the classes.

**Detailed description of preferred embodiments and best mode to carry out the invention**

For the generation of classifiers the data from the different subcellular structures is preferably fed into a machine learning system, more preferably a neural network learning system.

In another preferred embodiment of the present invention at least one back propagation algorithm is used for generating the classifiers in the neural network learning system.

Even more preferably subcellular structures are first labeled and then analyzed for providing the data of different subcellular structures.

According to a further preferred embodiment a digital image is created with labeled subcellular structures and then analyzed for providing the data of different subcellular structures.

More preferably, the information obtained from the analysis is compressed for providing the data of different subcellular structures.

The subcellular structures to be classified are preferably proteins which are more preferably fluorescently labeled.

More preferably, cell nuclei are stained with HISTONE 2B-CFP and corresponding proteins are fused with GFP.

After the labeling step and the creation of an image step the nuclear envelope or rim is further preferably identified by a classification algorithm.

More preferably, the image is smoothened, thresholds are applied for suppressing background and regions of homogenous image regions are identified.

New results obtained according to the present invention showed that a special neural network subtype, namely "Radial Base Neural Networks", reached far better results (68.8% instead 54.4% accuracies for the classification of all 12 classes) in much faster training times (5 minutes instead of 3 hours).

According to the present invention, image intensities are preferably fed to the neural network after lossy image. In contrast to the prior art, compression (called reducing "gaussian pyramid) which is still an "image" is done, while the prior art teaches to feed calculated image features into the classification training ("characteristics" of an image).

Due to the fact that image features are used in the prior art normalization procedures are needed and feature selection is appropriate which leads to longer preprocessing times, not necessary according to the present invention.

The present invention is based on GFP and derivate mutants enables the visualization process "in vivo", while the prior art shows localization in fixed cells "in vitro", see claim 12. This implies also a new application with observation over time (time series).

According to the present invention preferably an easy automatic identification of the nuclei HISTONE 2B-CFP is used which generates a homogenous staining of the DNA, while in the prior art Hoechst 33258 is used which explains the respective manual identification of nuclei.

Some of the subcellular structures are rotational variant. Rotation is therefore introduced into the model through simple image rotation (preferably 3 times 90°), while the prior art uses rotational invariant features constituting a costly complex transform "Zernike transform").

In conclusion the present invention has faster classification properties compared to the experiments according to the prior art. Thus, the invention is particularly advantageous to high throughput systems after intensive training settings. An application to in vivo techniques is one step ahead to currently requested setups in proteomics. The automatic identification of the nuclei as the center of the subcellular structure is advantageous for a fully automated image classification. New results show much faster training as well.

For the first evaluation a ready-made setup with a ZEISS confocal laser scanning microscope model 510 equipped with a motorized z-stage was used. 20 two dimensional images (512x512, RGB-TIFF images, 8 bit per channel) of 12 different classes were used. Each class represents a specific cell compartment or organelle. The cell nuclei were stained with HISTONE 2B-CFP (Ellenberg, 1998), while the corresponding proteins were fused with green fluorescence protein (GFP). The images were captured in this stage manually at 100x magnification in the above mentioned microscope. The first aim of this project was to identify the nuclear envelope or nuclear rim by robust classification algorithm.

The digital images were read in and a binomial Gauss filter was used to smoothen the HISTONE 2B-CFP image. The Gauss pyramids were calculated with a symmetric 5x5 filter kernel on the first level and a 3x3 mask on the second level. The same 3x3 filter mask was also used for the Laplace pyramids to recalculate the original size of the image by interpolation. The Laplace pyramids are derived from the Gauss pyramids by subtracting the smoothed from the unsmoothed image on each level.

The following steps were written as a C++ code and implemented as a direct link library (dll) in a program environment. Definable thresholds were applied to the blue (HISTONE 2B-CFP) and the green (GFP) channel to suppress background. On smoothed and threshold blue images a region growing algorithm was applied to identify regions of homogenous image information. After region growing, minimum and maximum object area limits defined the object area range of the HISTONE 2B-CFP stained nuclei. Then, the green fluorescence mean values were compared with the background around all found objects. GFP positive cell could be easily recognized by this method. The library returns coordinates of the GFP positive cell objects to the program. It turned out that the minimum size of one object for images captured in 100x magnification is around 150x150 pixels, which can of course vary for different cell lines. The program has been used to write out these object images. Before these images were used for further applications, all images were preferably controlled by eye and some images were deleted (around 10% per class).

The same combination of environment and library was used to convert the images to text files. Another dll code reduced the 150x150 pixel images in size by a 5x5 gaussian filtering to one fifth. This compression of image information step reduced the number of attributes used for subsequent classification. The resulting 900 (150/5x150/5 pixel) gray values were written to a text file with tab delimiters and new lines for each image information. An ID number for each case was prefixed. According to the type of the cell compartment different class numbers were attached (see Table 1).

In a first trial 226 images with an averaged number of 18 images per class were transferred to the classical neural network (back propagation) of the data mining tool. Two images of each class were set aside as a test set to check the accuracy of the generated classifier after training. From the beginning of the experiment some classes were combined. This rejoining was based on visual similarities in the subcellular structures. Some of this fused classes reflects also biological generalizations, but were not intended.

**Table 1**

| The first column indicates the different biological terms for the structures in the second column. In the last four columns the four different categories with combined classes (except the 12-classes category which reflects the original number of protein classes) are indicated. | | | | | |
|---|---|---|---|---|---|
| Cell structure | Sample Image | 12-classes belong to class | 7-classes belong to class | 6-classes belong to class | 2-classes belong to class |
| Chromatin | | 1 | 1 | 1 | 1 |
| Gytoplasm/nucleu | | 2 | 2 | 2 | 1 |
| Cytoplasm | | 3 | 3 | 2 | 1 |

(continued)

The first column indicates the different biological terms for the structures in the second column. In the last four columns the four different categories with combined classes (except the 12-classes category which reflects the original number of protein classes) are indicated.

| Cell structure | Sample Image | 12-classes belong to class | 7-classes belong to class | 6-classes belong to class | 2-classes belong to class |
|---|---|---|---|---|---|
| Endoplasmic reticulum (ER) | | 4 | 3 | 2 | 1 |
| Focal adhesions | | 5 | 4 | 3 | 1 |
| Golgi apparatus | | 6 | 4 | 3 | 1 |
| Microtubules | | 7 | 5 | 4 | 1 |
| Mitochondria | | 8 | 4 | 3 | 1 |
| Nuclear rim | | 9 | 9 | 9 | 9 |
| | | | | | |
| Nucleoli | | 10 | 6 | 5 | 1 |

(continued)

The first column indicates the different biological terms for the structures in the second column. In the last four columns the four different categories with combined classes (except the 12-classes category which reflects the original number of protein classes) are indicated.

| Cell structure | Sample Image | 12-classes belong to class | 7-classes belong to class | 6-classes belong to class | 2-classes belong to class |
|---|---|---|---|---|---|
| Peroxisome | | 11 | 4 | 3 | 1 |
| Plasmamembrane | | 12 | 2 | 2 | 1 |

The most important setting was done in the "Train Net" model node generating the classifier. This executes a back propagation neural network training. The first trials were made with the default setting in this model node (one hidden layer with 200 neurons). In the next run the accuracy could be increased significantly using two hidden layer with 200 and 15 neurons for the 12-classes category. Furthermore a third layer was introduced equal to the number of classes in the corresponding category (i.e. 250-50-12 neurons in the hidden layer for the 12-classes category). In the following, the accuracy tolerance rates are given (see Table 2 and Table 3).

**Table 2**

| 226 images as training set, the accuracies for the different categories for different hidden layer setting are shown. | | |
|---|---|---|
| **226 train** | **200-15 neurons** | **250-50-classes neurons** |
| 12-classes | 45.7 % (run A) | 56.3 % (run E) |
| 7-classes | 68.2 % (run B) | not done |
| 6-classes | 81.6 % (run C) | not done |
| 2-classes | 94.0 %* (run D) | not done |
| *accuracy limit 95%, instead default 90% to achieve 100 % accuracy in the test | | |

**Table 3**

| Average accuracies and single accuracies for each class are shown for each run from Table 2 using the 24 test image set. | | | | | |
|---|---|---|---|---|---|
| **24 test** | **run A** | **run E** | **run B** | **run C** | **run D** |
| Chromatin (1) | 100 % | 100 % | 100 % | 100 % | 100 % (1) |
| Cytoplasm/nucleus (2) | 100 % | 100% | 100% (2) | 75 % (2) | 100 % 1) |
| Cytoplasm (3) | 0 % | 100 % | 25 % (3) | 75 % (2) | 100 % (1) |
| ER (4) | 0 % | 0 % | 25 % (3) | 75 % (2) | 100 % (1) |
| Focal adhesions (5) | 100 % | 0 % | 62.5 % (4) | 62.5 % (3) | 100 % (1) |
| Golgi apparatus (6) | 0 % | 0 % | 62.5 % (4) | 62.5 % (3) | 100 % (1) |
| Microtubli (7) | 0 % | 0 % | 50 % | 0 % | 100 % (1) |
| Mitochondria (8) | 0 % | 0 % | 62.5 % (4) | 62.5 % (3) | 100 % (1) |
| Nuclear Rim (9) | 100 % | 100 % | 100 % | 100 % | 100 % |
| Nucleoli (10) | 100 % | 100 % | 100 % | 100 % | 100 % (1) |

(continued)

| Average accuracies and single accuracies for each class are shown for each run from Table 2 using the 24 test image set. | | | | | | |
|---|---|---|---|---|---|---|
| **24 test** | | **run A** | **run E** | **run B** | **run C** | **run D** |
| | Peroxisome (11) | 0 % | 50 % | 62.5 % (4) | 62.5 % (3) | 100 % (1) |
| | Plasmamembrane (12) | 0% | 0 % | 100 % (2) | 75 % (2) | 100 % (1) |
| | averaged | 41.7 % | 41.7 % | 70.8 % | 70.8 % | 100 % |

The accuracy results were surprisingly high for such a small number of training images. Nevertheless it is recommended to have at least 2300 training cases when 900 fields are calculated. By optimistic estimations, we should have:

$$(1) \qquad N = H \, / \, \text{tolerance},$$

whereas

$$(2) \qquad H = (A + \text{outputs}) / \, 2$$

tolerance is a threshold of outputs, N is the number of training cases, H number of hidden layer, A number of attributes or fields, and the outputs are number of classes.
tolerance = 0.2 (i.e. 0.86 will be interpreted as 1 and 0.78 as 0)

$$H = (900 + 12) / \, 2 = 456$$

$$N = 456 / \, 0.2 = 2280$$

As expected from the visual observation the critical classes are: cytoplasm, endoplasmic reticulum, focal adhesions, Golgi apparatus, microtubules, and plasmamembrane which could not be clearly discriminated in the 12-classes category, while chromatin, cytoplasm/nucleus, nuclear rim, nucleoli, peroxisomes were recognized. One critical feature of these structures is the rotation variation and translation. To overcome this problem for the moment and the small number of training cases all images were rotated three times by 90° and stored as new images. By this approach the number of training cases were increased to 904 images, and the test images to 96 images. For an order-independent learning of the neural network the images were shuffled randomly. With the fourfold amount of training set (904 images) higher accuracies were achieved (see Table 4, Table 5 and Table 6).

**Table 4**

| 904 images as training set, the accuracies for the different categories for different hidden layer setting are shown. | | | |
|---|---|---|---|
| **904 train** | | **250-50-classes neurons** | **200-15-neurons** |
| | 12-classes | 69.0 % (run A) | not done |
| | 7-classes | 74.5 % (run B) | not done |
| | 6-classes | 79.9 % (run C) | 77.5 % (run E) |
| | 2-classes | 95.6 %* (run D) | not done |
| *accuracy limit 95% | | | |

**Table 5**

| Averaged accuracies and single accuracies for each class are shown for each run from Table 4 using the 96 test image set. | | | | | |
|---|---|---|---|---|---|
| **96 test** | **run A** | **run B** | **run C** | **run E** | **run D** |
| **Chromatin (1)** | 100 % | 100 % | 100 % | 100 % | 100 % (1) |
| **Cytoplasm/nucleus (2)** | 100 % | 100 % (2) | 71.9 % (2) | 78.1% (2) | 100 % (1) |
| **Cytoplasm (3)** | 25 % | 43,5 % (3) | 71.9 % (2) | 78.1 % (2) | 100 % (1) |
| **ER(4)** | 0 % | 43,5 % (3) | 71.9 % (2) | 78.1 % (2) | 100 % (1) |
| **Focal adhesion sites (5)** | 0 % | 75 % (4) | 71.9 % (3) | 50 % (3) | 100 % (1) |
| **Golgi apparatus (6)** | 0 % | 75 % (4) | 71.9% (2) | 50 % (3) | 100 % (1) |
| **Microtubli (7)** | 87.5 % | 12.5 % | 25 % | 0 % | 100 % (1) |
| **Mitochondria (8)** | 0 % | 75 % (4) | 71.9 % (3) | 50 % (3) | 100 % (1) |
| **Nuclear Rim (9)** | 100 % | 100 % | 100 % | 100 % | 100 % |
| **Nucleoli (10)** | 100 % | 100 % | 100 % | 100 % | 100 % (1) |
| **Peroxisomes (11)** | 62.5 % | 75 % (4) | 71.9 % (3) | 50 % (3) | 100 % (1) |
| **Plasmamembrane (12)** | 100 % | 100 % (2) | 71.9 % (2) | 78.1 % (2) | 100 % (1) |
| **averaged** | 54.3 % | 75 % | 75 % | 67.5 % | 100 % |

**Table 6**

Shows the detailed accuracies for each class with the number of correct and wrong classified cases performed the run C (6-classes category)

| | |
|---|---|
| Correct : | 72 (75.00%) |
| Wrong : | 24 (25.00%) |
| Total : | 96 |

Coincidence Matrix

|   | 1 | 2 | 3 | 4 | 5 | 9 |
|---|---|---|---|---|---|---|
| 1 | 8 | 0 | 0 | 0 | 0 | 0 |
| 2 | 0 | 23 | 3 | 6 | 0 | 0 |
| 3 | 0 | 7 | 23 | 2 | 0 | 0 |
| 4 | 0 | 1 | 5 | 2 | 0 | 0 |
| 5 | 0 | 0 | 0 | 0 | 8 | 0 |
| 9 | 0 | 0 | 0 | 0 | 0 | 8 |

Performance Evaluation

| | |
|---|---|
| 1 : | 2.4849 |
| 2 : | 0.80012 |
| 3 : | 0.80012 |
| 4 : | 0.87547 |
| 5 : | 2.4849 |
| 9 : | 2.4849 |

class : 1

| | |
|---|---|
| Correct : | 8 (100.00%) |
| Wrong : | 0 (0.00%) |
| Total : | 8 |

(continued)

Class : 2

| | |
|---|---|
| Correct : | 23 (71.88%) |
| Wrong : | 9 (28.13%) |
| Total : | 32 |

Class : 3

| | |
|---|---|
| Correct : | 23 (71.88%) |
| Wrong : | 9 (28.13%) |
| Total : | 32 |

Class : 4

| | |
|---|---|
| Correct : | 2 (25.00%) |
| Wrong : | 6 (75.00%) |
| Total : | 8 |

Class : 5

| | |
|---|---|
| Correct : | 8 (100.00%) |
| Wrong : | 0 (0.00%) |
| Total : | 8 |

Class : 9

| | |
|---|---|
| Correct : | 8 (100.00%) |
| Wrong : | 0 (0.00%) |
| Total : | 8 |

**References**

Boland, M.V., M.K. Markey, and R.F.Murphy. 1998. Automated Recognition of Patterns Characteristic of Subcellular Structures in Fluorescence Microscopy Images. *Cytometry* 33:366-375

Chaifie, M., Y. Tu, G. Euskirchen, W.W. Ward, and D.C. Prasher. 1994. Green fluorescent protein as a marker for gene expression. *Science.* 263:802-5.

Cho, J.M. 2000. Chromosome classification using backpropagation neural networks. *IEEE Eng Med Biol Mag.* 19: 28-33.

Cutler, S.R., D.W. Ehrhardt, J.S. Griffitts, and C.R. Somerville. 2000. Random GFP::cDNA fusions enable visualization of subcellular structures in cells of Arabidopsis at a high frequency. *Proc Natl Acad Sci U S A.* 97:3718-23.

Davis, A.R., K. Meyers, and J.M. Wilson. 1998. High throughput method for creating and screening recombinant adenoviruses. *Gene Ther.* 5:1148-52.

Ding, D.Q., Y. Tomita, A. Yamamoto, Y. Chikashige, T. Haraguchi, and Y. Hiraoka. 2000. Large-scale screening of intracellular protein localization in living fission yeast cells by the use of a GFP-fusion genomic DNA library. *Genes Cells.* 5:169-90.

Ellenberg, J., Lippincott-Schwartz, J., and Presley, J. F.,. 1998. Two-color green fluorescent protein time-lapse imaging. *Biotechniques.* 25:838-42, 844-6.

Frankel, D.S., S.L. Frankel, B.J. Binder, and R.F. Vogt. 1996. Application of neural networks to flow cytometry data analysis and real- time cell classification. *Cytometry.* 23:290-302.

Hanzel, D.K., J.Q. Trojanowski, R.F. Johnston, and J.F. Loring. 1999. High-throughput quantitative histological analysis of Alzheimer's disease pathology using a confocal digital microscanner. *Nat Biotechnol.* 17:53-7.

Joo, H., A. Arisawa, Z. Lin, and F.H. Arnold. 1999. A high-throughput digital imaging screen for the discovery and directed evolution of oxygenases. *Chem Biol.* 6:699-706.

Marabini, R., and J.M. Carazo. 1994. Pattern recognition and classification of images of biological macromolecules using artificial neural networks. *Biophys J.* 66:1804-14.

Markey M.K., M.V. Boland, and R.F. Murphy. 1999. Toward Objective Selection of Representative Microscope Images. *Biophysical Journal.* 76: 2230-2237.

McCulloch, W.S., and W. Pitts. 1943. A Logical Calculus of Ideas Immanent in Nervous Acitivity. *Bulletin of Mathematical Biophysics.* 5:115-33.

Murphy R.F., M.V. Boland, and M. Velliste. 2000. Towards a Systematics for Protein Subcellular Location: Quantitative Description of Protein Localization Patterns and Automated Analysis of Fluorescence Microscop Images.

*ISMB Conference*

Prasher, D.C., V.K. Eckenrode, W.W. Ward, F.G. Prendergast, and M.J. Cormier. 1992. Primary structure of the Aequorea victoria green-fluorescent protein. *Gene.* 111:229-33.

Rolls, M.M., P.A. Stein, S.S. Taylor, E. Ha, F. McKeon, and T.A. Rapoport. 1999. A visual screen of a GFP-fusion library identifies a new type of nuclear envelope membrane protein. *J Cell Biol.* 146:29-44.

Rosenblatt, F. 1962. Principles of Neuodynamics. Spartan, New York.

Sondergaard, I., B.N. Krath, and M. Hagerup. 1992. Classification of crossed immunoelectrophoretic patterns using digital image processing and artificial neural networks. *Electrophoresis. 13:411-5.*

Ward, G.E., and K.L. Carey. 1999. 96-Well plates providing high optical resolution for high-throughput, immunofluorescence-based screening of monoclonal antibodies against Toxoplasma gondii. *J Immunol Methods.* 230:11-8.

Werbos, P. 1974. Beyond Regression: New Tools for Prediction and Analysis in the Behavioral Sciences. Harvard University.

Wu, C., and S. Shivakumar. 1994. Back-propagation and counter-propagation neural networks for phylogenetic classification of ribosomal RNA sequences. *Nucleic Acids Res.* 22:4291-9.

**Claims**

1. Method for classifying cellular structures with the following steps:

   (a) providing data of different subcellular structures by creating and analyzing a digital image with labeled subcellular structures, wherein the information obtained from the analysis is compressed,
   (b) automatically generating classifiers for classifying the different subcellular structures, by feeding the data from the different subcellular structures into a machine learning system.

2. Method according to claim 1, wherein further data of different subcellular structures is classified according to the classifiers generated in step (b).

3. Method according to claim 1 or 2, wherein the machine learning system is a neural network.

4. Method according to claim 3, wherein the neural network is a radial base neural network.

5. Method according to claim 3 or 4, wherein for generating the classifiers in the neural network a back propagation algorithm is used.

6. Method according to at least one of the preceding claims, wherein the subcellular structures to be classified are proteins.

7. Method according to claim 6, wherein the proteins are fluorescently labeled.

8. Method according to claim 6 or 7, cell nuclei are stained with HISTONE 2B-CFP and corresponding proteins are fused with GFP.

9. Method according to at least one of the preceding claims, wherein after creation and analysing said digital image with labelled sub cellules structures the nuclear envelope or rim is identified by a classification algorithm.

10. Method according to at least one of the preceding claims, wherein said image is smoothened, thresholds are applied for suppressing background and regions of homogenous image regions are identified.

11. Method according to at least one of the preceding claims, wherein a rotation is introduced into the model through simple image rotation.

12. Computer program comprising program code means adapted to perform each of the method steps of at least one of the preceding claims when said program is run on a computer.

13. Computer readable means embodying a computer program comprising code means that when executed by a data processing system perform each of the method steps of at least one of claims 1-11.

14. Computer system comprising means adapted to perform each of the method steps of at least one of claims 1-11.

**Patentansprüche**

1. Verfahren zur Klassifizierung von Zellstrukturen mit den folgenden Schritten:

   (a) Bereitstellen von Daten verschiedener subzellularer Strukturen durch Erzeugen und Analysieren eines digitalen Bilds mit markierten subzellularen Strukturen, wobei die aus der Analyse gewonnene Information komprimiert ist,
   (b) automatische Erzeugung von Klassifizierern zum Klassifizieren der verschiedenen subzellularen Strukturen durch Zuführen der Daten von den verschiedenen subzellularen Strukturen in ein Maschinenlernsystem.

2. Verfahren nach Anspruch 1, wobei weitere Daten von verschiedenen subzellularen Strukturen gemäß den in Schritt (b) erzeugten Klassifizierern klassifiziert werden.

3. Verfahren nach Anspruch 1 oder 2, wobei das Maschinenlernsystem ein neuronales Netz ist.

4. Verfahren nach Anspruch 3, wobei das neuronale Netz ein neuronales Netz radialer Basis ist.

5. Verfahren nach Anspruch 3 oder 4, wobei zum Erzeugen der Klassifizierer in dem neuronalen Netz ein Backpropagation-Algorithmus verwendet wird.

6. Verfahren nach mindestens einem der vorstehenden Ansprüche, wobei die zu klassifizierenden subzellularen Strukturen Proteine sind.

7. Verfahren nach Anspruch 6, wobei die Proteine fluoreszenzmarkiert sind.

8. Verfahren nach Anspruch 6 oder 7, wobei die Zellkerne mit HISTONE 2B-CFP markiert sind und entsprechende Proteine mit GFP verbunden sind.

9. Verfahren nach mindestens einem der vorstehenden Ansprüche, wobei nach Erzeugen und Analysieren des digitalen Bilds mit markierten subzellularen Strukturen die Zellkernhülle oder der Zellkernrand durch einen Klassifizierungsalgorithmus identifiziert wird.

10. Verfahren nach mindestens einem der vorstehenden Ansprüche, wobei das Bild geglättet wird, Schwellenwerte zum Unterdrücken von Hintergrund angewendet werden und Bereiche von homogenen Bildbereichen identifiziert werden.

11. Verfahren nach mindestens einem der vorstehenden Ansprüche, wobei durch eine einfache Bilddrehung eine Drehung in das Modell eingebracht wird.

12. Computerprogramm mit Programmcodemitteln, die geeignet sind, um jeden der Verfahrensschritte mindestens eines der vorstehenden Ansprüche durchzuführen, wenn das Programm auf einem Computer ausgeführt wird.

13. Computerlesbare Mittel, die ein Computerprogramm verkörpern, mit Codemitteln, die, wenn sie von einem Datenverarbeitungssystem ausgeführt werden, jeden der Verfahrensschritte mindestens eines der Ansprüche 1 bis 11 durchführen.

14. Computersystem mit Mitteln, die angepaßt sind, um jeden der Verfahrensschritte mindestens eines der Ansprüche 1 bis 11 durchzuführen.

**Revendications**

1. Méthode pour classifier des structures cellulaires avec les étapes suivantes consistant :

   (a) à fournir des données de différentes structures sous-cellulaires en créant et en analysant une image numérique avec des structures sous-cellulaires marquées, les informations obtenues par l'analyse étant compressées, (b) à générer automatiquement des classificateurs pour classifier les différentes structures sous-cellulaires, en introduisant les données des différentes structures sous-cellulaires dans un système d'acquisition de connaissances.

2. Méthode selon la revendication 1, dans laquelle des données supplémentaires de différentes structures sous-cellulaires sont classifiées d'après les classificateurs générés dans l'étape (b).

3. Méthode selon la revendication 1 ou 2, dans laquelle le système d'acquisition de connaissances est un réseau neuronal.

4. Méthode selon la revendication 3, dans laquelle le réseau neuronal est un réseau neuronal de base radiale.

5. Méthode selon la revendication 3 ou 4, dans laquelle, pour générer les classificateurs dans le réseau neuronal, un algorithme de rétropropagation est utilisé.

6. Méthode selon au moins l'une des revendications précédentes, dans laquelle les structures sous-cellulaires à classifier sont des protéines.

7. Méthode selon la revendication 6, dans laquelle les protéines sont marquées par fluorescence.

8. Méthode selon la revendication 6 ou 7, dans laquelle des noyaux cellulaires sont colorés avec de l'HISTONE 2B-CFP et les protéines correspondantes sont fusionnées avec GFP.

9. Méthode selon au moins l'une des revendications précédentes, dans laquelle, après la création et l'analyse de ladite image numérique avec des structures sous-cellulaires marquées, l'enveloppe nucléaire ou bord est identifié(e) par un algorithme de classification.

10. Méthode selon au moins l'une des revendications précédentes, dans laquelle ladite image est lissée, des seuils sont appliqués pour supprimer le fond, et les régions de régions d'image homogènes sont identifiées.

11. Méthode selon au moins l'une des revendications précédentes, dans laquelle une rotation est introduite dans le modèle par rotation d'image simple.

12. Programme informatique comprenant des moyens de code de programme adaptés pour réaliser chacune des étapes de méthode d'au moins l'une des revendications précédentes lorsque ledit programme est utilisé sur un ordinateur.

13. Moyens lisibles par un ordinateur mettant en oeuvre un programme informatique comprenant des moyens de code qui, lorsqu'ils sont exécutés par un système de traitement de données, réalisent chacune des étapes de méthode d'au moins l'une des revendications 1 à 11.

14. Système informatique comprenant des moyens adaptés pour réaliser chacune des étapes de méthode d'au moins l'une des revendications 1 à 11.